# EUROPEAN PATENT APPLICATION

(11) **EP 1 879 378 A2**
(43) Date of publication of application: **16.01.2008**
(21) Application number: 07252812.8
(22) Date of filing: 13.07.2007
(51) Int. Cl.: H04N 5/232

(54) **Imaging apparatus and imaging method**

(30) Priority: 14.07.2006 JP 2006194691
(71) Applicant: Ricoh Company, Ltd., Tokyo 143-8555 (JP)
(72) Inventor: Itoh, Kei, Ohta-ku, Tokyo 143-8555 (JP)
(74) Representative: Leeming, John Gerard

(57) **Abstract**

An imaging apparatus for obtaining image data by receiving a light of a subject which has passed through a photographing lens includes a focus detection device for detecting focal points from image data areas of a plurality of image data obtained by moving a position of the photographing lens, a ranging device for conducting ranging from the subject, and a focus determination device for determining a focal point from the focal points detected by the focus detection device according to a ranging result of the ranging device.

## Description

The present invention relates to an imaging apparatus and an imaging method for automatically detecting a focal point suitable for an electronic imaging device such as a digital still camera.

An electronic imaging device such as a digital still camera generally includes an AF (autofocusing) device for automatically focusing on a subject. For example, a mountain-climbing AF control is disclosed in JP-S39-5265A as an AF control method in an AF device. Such a mountain-climbing AF control is widely used. In the mouattain-climbing AF control, an integration value of a brightness difference of adjacent pixels is obtained from picture signals output from an image pickup device, so as to use the integration value of the brightness difference as an AF evaluation value indicating a focusing level. When a camera is in a focused state, an outline portion of a subject is distinct, and the brightness difference between adjacent pixels increases. For this reason, the AF evaluation value increases. When the camera is in a non-focused state, the outline portion of the subject blurs, and the brightness difference between the pixels decreases. For this reason, the AF evaluation value decreases. In the AF operation, the AF evaluation value is sequentially obtained while moving lenses, and the lenses are stopped when the highest AF evaluation value is obtained, i.e., at the peak position, so as to use the position as the focused point.

Moreover, a highly accurate autofocusing device capable of shortening a focusing time is disclosed in JP2001-221945A. In this autofocusing device, a mountain-climbing AF operation is performed around a ranging position of an external AF result obtained by a multipoint external ranging device.
Furthermore, an autofocusing adjusting device is disclosed in JP2003-131121A, which varies a detection area and a search area of an internal AF according to conditions such as a result of an external AF device, brightness of a subject, a focal length of a lens and an aperture stop value.

However, if the mountain-climbing AF is conducted under a dark environment, a subject image is not correctly judged because of the dark environment, and noise intrudes into the AF evaluation value. Consequently, the detection of the peak becomes difficult. For this reason, there is a camera including a fill light LED for surfacing a subject image by illuminating the fill light LED to the subject. An automatic focus detection device is also disclosed in JP2005-258401A and JP-H10-073757A. In such an automatic focus detection device, ranging is performed by using strobe light or fill light LED in external AF ranging by means of a multipoint external ranging device, so as to improve the focusing accuracy.

It is known that a frequency characteristic on a telephoto side that a focal length increases becomes low frequency. In such case, if the mountain-climbing AF is performed, noise intrudes into the AF evaluation value, and also the slope of the mountain decreases. For this reason, the detection of the peak becomes difficult. It is caused by the frequency characteristic of the lens mounted on the digital still camera, the brightness of the lens and the low-frequency subject. In order to eliminate the noise, it is generally considered to provide a mechanism, which disposes a frequency transmission filter according to a focal length, or to perform a program process. However, this mechanism or the process is problem in terms of a process or costs of an actual digital camera.
In the autofocusing device described in JP2001-221945 and JP2003-131121, false focusing is reduced. However, the operation when the noise is included in the AF evaluation value has the problem as is conventionally done, and also it is problem that the false focusing is caused because a focused position can not be correctly determined in a plurality of mountains.

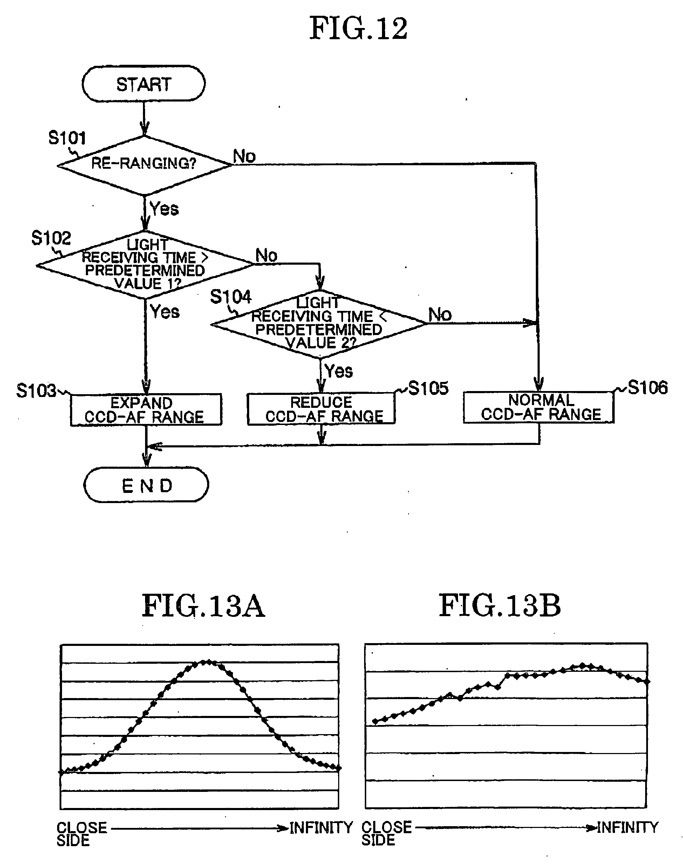

FIG. 13A illustrates an evaluation value waveform on a wide-angle side that a focal length is short. FIG 13B illustrates a low-frequency evaluation value waveform on a telephoto side that a focal length is long. Compared with these waveforms, the mountain on the telephoto side is greatly smoother than that on the wide angle side, and the peak position on the telephoto side is difficult to detect. In this case, it may be no problem if the focusing is achieved even in a false focused position when the depth of field is deep. However, if a distance difference to a focus position is large as a great distance, it increases the chance of miss focal position.
As to the ranging, under an environment that a subject stays back, there may be a case that the illumination of the fill light is not sufficient. In JP H10-073757A, focus detection by evaluating reliability is disclosed, but it is insufficient for the accuracy of the focus point detection. Similarly, as to the mountain-climbing AF, even if the fill light LED or the strobe light is illuminated, there may be a case that the noise accordingly generates in the AF evaluation value. For example, if the mountain-climbing AF is conducted with respect to the same subject, the detection of the peak of the mountain of the AF evaluation value waveform illustrated in FIG. 13B is obviously difficult compared with that of the AF evaluation value waveform illustrated in FIG. 13A, increasing the false focusing.

Accordingly, there is a need for an imaging apparatus and an imaging method for performing highly accurate autofocusing detection suitable for an electronic imaging apparatus such as a digital still camera.

A first aspect of the present invention involves an imaging apparatus for obtaining image data by receiving a light of a subject which has passed through a photographing lens, comprising: a focus detection device for detecting focal points from image data areas of a plurality of image data obtained by moving a position of the photographing lens; a ranging device for conducting ranging from the subject; and a focus determination device for determining a focal point from the focal points detected by the focus detection device according to a ranging result of the ranging device.
Preferably, the focus determination device determines the focal point according to the ranging result of the ranging device and a focal length detected by the focus detection device.

Preferably, when a distance of the ranging result of the ranging device has a distance shorter than a predetermined distance, the focus determination device determines the focal point from the focus detection result of an area indicating a closest side in the plurality of image data areas.
Preferably, when a distance of the ranging result of the ranging device has a distance longer than a predetermined distance, the focus determination device determines the focal point from the focus detection result of an area indicating a most distant side in the plurality of image data areas.
Preferably, the imaging apparatus further comprises a fill light illumination device for illuminating a light to the subject, wherein the ranging device conducts the ranging in a state that the fill light is illuminated by the fill light illumination device.

Preferably, the ranging device includes an accumulating device for accumulating the light, and an accumulating state detection device for detecting an accumulated state, and the focus determination device determines the focal point according to an accumulation time that the accumulating state detection device becomes a predetermined accumulation amount by the fill light from the fill light illumination device.
Preferably, when the accumulation time of the accumulating state detection device is shorter than a predetermined time, the focus determination device determines the focal point from the focus detection result of an area indicating a closest side in the plurality of image data areas.
Preferably, when the accumulation time of the accumulating state detection device is longer than a predetermined time, the focus determination device determines the focal point from the focus detection result of an area indicating a most distant side in the plurality of image data areas.

Preferably, the imaging apparatus comprises a driving area changing device for changing an area which drives the photographing lens according to the determination result of the focus determination device.
Preferably, the fill light illumination device is a strobe light emitting device.
Preferably, the fill light illumination device is an LED emitting device.
Preferably, the fill light illumination device is a lamp emitting device.

A second aspect of the present invention involves an imaging method of obtaining imaging data by receiving a light of a subject which has passed through a photographing lens, comprising the steps of: a focus detection step for detecting focal points from image data areas of a plurality of image data obtained by moving a position of the photographing lens; a ranging step for conducting ranging from the subject; and a focus determination step for determining a focal point from the focal points detected by the focus detection step according to a ranging result of the ranging step.
Preferably, when a distance of the ranging result of the ranging step has a distance shorter than a predetermined distance, the focus determination step determines the focal point from the focus detection result of an area indicating a closest side in the plurality of image data areas.

Preferably, when a distance of the ranging result of the ranging step has a distance longer than a predetermined distance, the focus determination step determines the focal point from the focus detection result of an area indicating a most distant side in the plurality of image data areas.
Preferably, the ranging step conducts the ranging in a state that a fill light is illuminated by a fill light illumination device for illuminating the light to the subject.
Preferably, the ranging step includes an accumulating step for accumulating the light, and an accumulating state detection step for detecting a state accumulated by the accumulating step, and the focus determination step determines the focal point according to a accumulation time that the accumulating state detection step becomes a predetermined accumulation amount by the till light from the fill light illumination device.

Preferably, when the accumulation time of the accumulating state detection step is shorter than a predetermined time, the focus determination step determines the focal point from the focus detection result of an area indicating a closest side in the plurality of image data areas.
Preferably, when the accumulation time of the accumulating state detection step is longer than a predetermined time, the focus determination step determines the focal point from the focal detection result of an area indicating a most distant side in the plurality of image data areas.
Preferably, the imaging method further comprises a driving area changing step for changing an area which drives the photographing lens according to the determination result of the focus determination step.

These and other features, aspects, and advantages of the present invention will become better understood with regard to the following description, appended claims, and accompanying drawings.
FIG. 1A is a schematic view illustrating a top view of a digital still camera according to an embodiment of the present invention.
FIG. 1B is a schematic view illustrating a front view of the digital still camera according to the embodiment of the present invention.
FIG. 1C is a schematic view illustrating a back view of the digital still camera according to the embodiment of the present invention.
FIG. 2 is a block diagram illustrating an internal structure of the digital still camera according to the embodiment of the present invention.
FIG. 3A is an explanation view illustrating a CCD-AF according to the embodiment of the present invention.
FIG. 3B is an explanation view illustrating the CCD-AF according to the embodiment of the present invention.
FIG. 4 is a flow chart illustrating an arithmetic method and a structure of a ranging unit according to the embodiment of the present invention.
FIG 5 is a flow chart illustrating an operation of the digital still camera according to the embodiment of the present invention.
FIG. 6 is a flow chart illustrating a CCD-AF process according to the embodiment of the present invention.
FIG. 7 is a flow chart illustrating a CCD-AF process according to the embodiment of the present invention.
FIG. 8 is a flow chart illustrating an AF sequence order which is the operation of the digital still camera according to the embodiment of the present invention.
FIG. 9 is a flow chart illustrating a re-ranging process of the ranging unit according to the embodiment of the present invention.
FIG. 10 is a flow chart illustrating a CCD-AF determination process according to the embodiment of the present invention.
FIG. 11 is a flow chart illustrating an AF sequence order according to the embodiment of the present invention.
FIG. 12 is a flow chart illustrating a CCD-AF area determination process according to the embodiment of the present invention.
FIG. 13A illustrates one example of an evaluation value waveform on a wide angle side that a focal length is short.
FIG. 13B illustrates one example of a low-frequency evaluation value waveform on a telephoto side that a focal length is long.

Although the present invention is described in terms of exemplary embodiments, it is not limited thereto. It should be appreciated that variations may be made in the embodiments described by persons skilled in the art without departing from the scope of the present invention as defined by the following claims. In addition, the number, position, shape, or the like of the components are not limited to the above embodiments, and can be changed to a number, position, shape or the like of components preferable for conducting the present invention. Moreover, no element or component in the present disclosure is intended to be dedicated to the public regardless of whether the element or component is explicitly recited in the following claims.

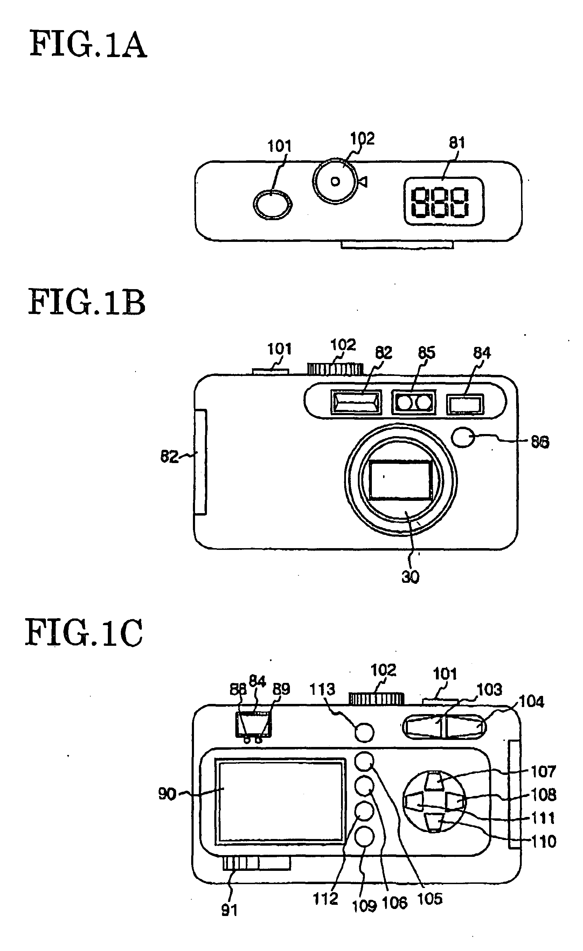

FIG. 1A is a schematic view illustrating a top view of a digital still camera in one example of an imaging apparatus as the embodiment of the present invention. FIG. 1B is a schematic view illustrating a front view of the digital still camera in one example of the imaging apparatus as the embodiment of the present invention. FIG. 1C is schematic view illustrating a back view of the digital still camera in one example of the imaging apparatus as the embodiment of the present invention. Referring to FIG. 1, a camera includes a top face thereof a release switch 101, a mode dial 102 and a sub liquid crystal display 81. The camera includes a front face thereof a lens barrel unit 30 having lenses, a lid 82 of a memory card housing room and a battery housing room, a strobe light emitting section 83, an optical finder 84, a ranging unit (external AF unit) 85 and a remote control light receiving section 86. The camera includes on a back face thereof the optical finder 84, an AF LED 88, a strobe light LED 89, a liquid crystal display monitor 90, a power source switch 91, a wide angle direction zooming switch 103, a telephoto direction zooming switch 104, a switch 105 for setting and releasing a self timer 105, a menu switch 106, an upward movement and strobe light setting switch 107, a right movement switch 108, a display switch 109, a downward movement and micro switch 110, a left movement and image confirmation switch 111, an OK switch 112, and a quick access switch 113.
The front face of the digital still camera according to the embodiment of the present invention includes an AF fill light LED (LED emitting device) as a fill light illumination device (not shown). Moreover, the digital still camera may include a lamp emitting device as the fill light illumination device. Furthermore, the strobe light emitting section 83 can be used as the fill light illumination device if the strobe light emitting section 83 has a sufficient charging capacity.

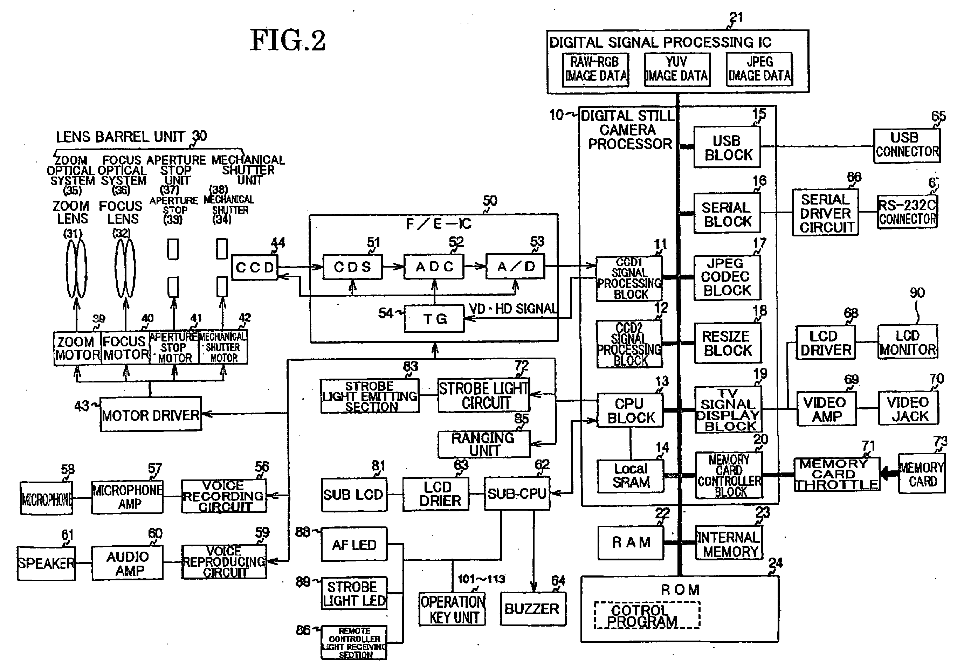

FIG. 2 is a block diagram illustrating a system structure of an internal portion of the digital still camera according to the embodiment of the present invention. The system structure of the internal portion of the digital still camera includes a processor 10. In FIG. 2, each section of the digital still camera is controlled by the processor 10. The processor 10 includes outside thereof a first CCD signal processing block 11, a second CCD signal processing block 12, a CPU block 13, a local SRAM 14, a USB block 15, a serial block 16, a JPEG.·CODEC block 17, a RESIZE block 18, a TV signal display block 19 and a memory card controller block 20. These are connected each other via bus lines. The system structure of the internal portion of the digital still camera also includes a digital processing IC (SDRAM) 21 for storing RAW-RGB image data, YUV image data, and JPEG image data, a RAM 22, an internal memory 23, an a ROM 22 in which a control program is stored. These are connected with the processor 10 by the bus lines.

A lens barrel unit 30 includes a zooming optical system 35 having a zooming lens 31, a focus optical system 36 having a focusing lens (photographing lens) 32, an aperture stop unit 37 having an aperture stop 33, and a mechanical shutter unit 38 having a mechanical zooming shutter 34. The zooming optical system 35, the focusing optical system 36, the aperture stop unit 37 and the mechanical shutter unit 38 are driven by a zoom motor 39, a focusing motor 40, an aperture stop motor 41, and a mechanical shutter motor 42, respectively. The operation of each motor is controlled by a motor driver 43 which is controlled by a CPU block 13 of the processor 10.
The lens barrel unit 30 includes lenses for forming a subject mage on a CCD 44 of an image pick-up device. The CCD 44 converts the subject image into image signals and input the converted subject image to an F/E-IC 50. The F/E-IC 50 includes a CDS 51, an ADC 52, an A/D converter 53, and a TO (timing generator) 54. The F/E-IC 50 conducts predetermined processes to the image signals and converts the image signals into digital signals, so as to input the digital signals into the first CCD signal processing block 11 of the processor 10. These signal processing operations are controlled via the TG 54 by VD-HD signals output from the first CCD signal processing block 11 of the processor 10.

The CPU block 13 of the processor 10 controls a voice recording operation by a voice recording circuit 56. A microphone 58 converts voice signals. The voice recording circuit 56 records the voice signals amplified by a microphone amplifier 57 according to a command. The CPU block 13 controls an operation of a voice reproducing circuit 59. The voice reproducing circuit 59 reproduces voice signals recorded in a predetermined memory, inputs the voice signals into an audio amplifier 60, and outputs the voice from a speaker 61, according to a command. The CPU block 13 controls an operation of a strobe light circuit 72, so as to flash the illumination light from the strobe light emitting section 83. The CPU block 13 also controls operation of the ranging unit 85.

The CPU block 13 is connected with a sub CPU 62 disposed in the external portion of the processor 10. The sub CPU 62 controls display of a sub liquid crystal display 81 via a liquid crystal display driver 63. The sub CPU 62 is also connected with the AF LED 88, the strobe light LED 89, the remote control light receiving section 86, the operation key unit having switches 101-113 in FIG. 1, and a buzzer 64.
The USB block 15 is connected with a USB connector 65. The serial block 16 is connected with an RS-232C connector 67 via a serial driver circuit 66. The TV display block 19 is connected with the liquid display monitor 90 via the liquid display driver 68, and also is connected with a vide jack 70 via a video amplifier 69. The memory card controller block 20 is connected with a contact point of a memory card throttle 71 and a contact point of a memory card 73.

Next, a basic operation of the digital still camera according to the embodiment of the present invention will be described. If a user sets the mode dial 102 illustrated in FIG. 1 to a recording mode, the camera activates with the recording mode. If the mode dial 102 is set, the CPU block 13 detects that the condition of the mode switch included in the operation section in FIG. 1 becomes the recording mode ON, and controls the driver motor 43 so as to move the lens barrel unit 30 to a photographable position. Moreover, the CPU block 13 powers on each section such as the CCD 44, the F/E-IC 50 and the liquid display 90, so as to start the operation of each section. If each section is powered on, an operation of a finder mode is started.
In the finder mode, the light entered into the CCD 44 of the image pick up device through the lenses is converted into electric signals, and the converted electric signals are sent to the CDS circuit 51, the ADC 52 and the A/D converter 53 as the analogue RGB signals. Each of the signals converted into the digital signals by the A/D converter 53 is converted into a YUV signal by the YUV converter in the digital signal processing IC 21, and the YUV signal is written in the flame memory by the memory controller. The YUV signal is read out by the memory controller, and is sent to a TV or the liquid display monitor 90 via the TV signal display block 19 to be displayed thereon. This process is conducted at 1/30 second interval, and becomes the display of the finder mode which is renewed at 1/30 second.

An AF evaluation value indicating the focusing degree of the screen and an AE evaluation value indicating the exposure condition are calculated by the digital RGB signals loaded into the I/F block of the CCD of the digital signal processing IC 21. The AF evaluation value data is read out by the CPU as characteristic data, and is used for the AF process. If the camera is in a focused state, the edge portion of the subject image is distinct. Therefore, a high-frequency component value of the integration value increases. By using this, in a focusing detection operation by the AF, the AF evaluation value in each of the focusing lens positions is obtained, so as to detect a maximum point (peak position). In addition, if a plurality of maximum points is detected, the magnitude of the evaluation values of the peak positions and the decrease and increase levels between the evaluation values around the peak positions are determined, so as to obtain the most reliable point as the focused position, and the AF is conducted by using the focused position.
Moreover, the AE evaluation value is obtained by using brightness data in each of areas obtained by dividing the digital RGB signals into several areas. More particularly, the AE evaluation value is obtained, such that the pixels, which exceed a predetermined threshold, in a plurality of pixels in each of the areas are adopted as target pixels, and their brightness values are added, and then the brightness value obtained by adding is multiplied by the number of target pixels. The appropriate exposure amount is calculated by the brightness distribution of each area, and the correction is conducted to the loading of next frame.

Next, a basic focus detection method and a ranging method of the digital still camera according to the embodiment of the present invention will be described. At first, a ranging method in a half-pressed state of a release button as the basic function will be described.
If the release button becomes the half-pressed state, the camera starts the focusing. In this focusing process, a light receiving command is regularly sent to the ranging unit 85 (refer to FIG. 2) from the digital still camera processor 10 from before the release button is half-pressed, such that the ranging result is output by the ranging unit 85. If the release button becomes the half-pressed sate, the focusing optical system 36 is moved to a focusing position corresponding to a subject distance obtained by the ranging result. Next, if the CUP block 13 drives the driving motor 40 of the focusing lens 32 via the motor driver 43 by synchronizing with the frame rate, the mountain-climbing AF (hereinafter, refer to CCD-AF) is conducted. The mountain-climbing AF area includes only the periphery of the focusing position by the ranging result. The AF time is thus reduced by conducting the mountain-climbing AF only in the periphery of the focusing position. If the ranging is not possible, the focused area includes an entire area from the infinite focused state to the closest focused sate, the focusing lens moves from the closest state to the infinite focused state or from the infinite focused state to the closest focused state, and a microprocessor reads out the AF evaluation value in each of the focusing positions of each frame prepared in the digital signal processing IC 21. The point that the AF evaluation value of each of the focusing positions becomes the maximum value is adopted as the focused position. The focusing lens 32 is moved to the focused position.

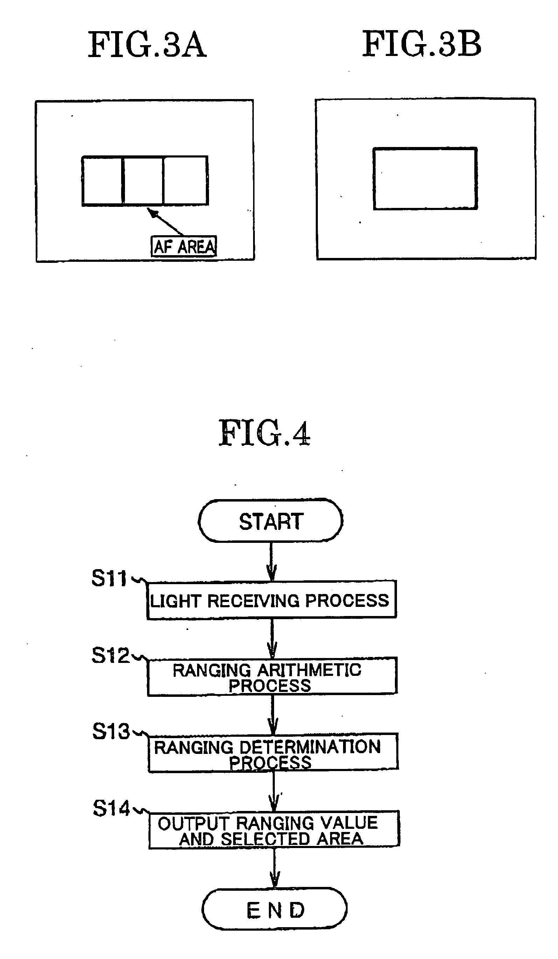

FIG. 3A, 3B are views each illustrating the CCD-AF which is achieved by using a plurality of areas in the area of the liquid crystal display 90, according to the embodiment of the present invention. For example, if the ranging is possible, the CCD-AF is performed by using a plurality of areas as illustrated in FIG. 3A. If the ranging is not possible, the AF accuracy is improved by increasing the area shown in FIG. 3B.
The analogue RGB signals brought out from the CCD 44 after the AF are converted into the digital RGB signals. The digital RGB signals are stored in the digital processing IC 21 as the frame memory via the digital signal processing IC. The digital RGB signals are again loaded in the digital signal processing circuit, and are converted into YUV data. The YUV data are written back to the frame memory.
When imaging a still image, the image data converted into the YUV data is sent to the JPEG CODEC block 17 as the image compression and expansion circuit in the digital signal processing IC. The YUV data sent to the image compression and expansion circuit is compressed, and the compressed data is written back to the frame memory. The compressed data in the frame memory is read out via the digital signal processing circuit, and is stored in a data storing memory, for example, a memory card.

Next, the arithmetic method and the structure of the ranging unit 85, and the focus detection method using the arithmetic result from the ranging unit 85 will be described. At first, the arithmetic method and the structure of the ranging unit 85 will be described
The ranging unit 85 includes inside thereof charge storage light receiving sensors each of which is arranged in line on the right and left (not shown), for example, CCD line sensors. Each of the light receiving sensors is divided into a plurality of light receiving areas, and the areas on the light and left correspond to each other. If the light receiving command is sent from the CPU block 13 to the ranging unit 85, the right and left light receiving sensors receive the light. The light receiving is automatically completed if at least one light receiving sensor by which a predetermined light volume or more is received exists in the light receiving sensors.
If the light receiving is completed, the correlation of the right and left subject images in each area of the light receiving sensors is detected, and the difference between the right and left light receiving elements is calculated based on the detected correlation value, The distance to the subject is calculated by using a triangulation method from the calculated difference, and the calculated distance is used as a ranging value. Therefore, each of the areas has a ranging value (distance data) different to each other. The ranging value and the area to be actually output to the camera side from the ranging unit 85 is decided by determining whether or not the ranging value of each of the areas is smaller than the ranging value of another area, or whether or not the availability of the sensor data received in the area is high. The availability of the sensor data is determined whether or not the contrast of the received data in right and left areas and the difference between the right and left images satisfy a prescribed value. However, if all of the areas do not satisfy the prescribed value, an area including the ranging value having the highest availability (the closest to the prescribed value) is selected from all of the areas.

FIG. 4 is a flow chart illustrating the focus detection method using the arithmetic result from the ranging unit 85 according to the embodiment of the present invention. Referring to FIG. 4, the luminous flux of the subject is received by a charge storage light receiving element by means of the light receiving process with respect to the light receiving of the ranging unit 85 (S11). Next, the ranging arithmetic process is conducted to calculate the ranging value (S12). The arithmetic method is as described above in the arithmetic method and the structure of the ranging unit 85. Next, the distance of the area having high availability is output as the ranging value in the ranging values relative to the respective areas calculated in the ranging determination process at step S13, and also the selected area is output (S14).

### (First Embodiment)

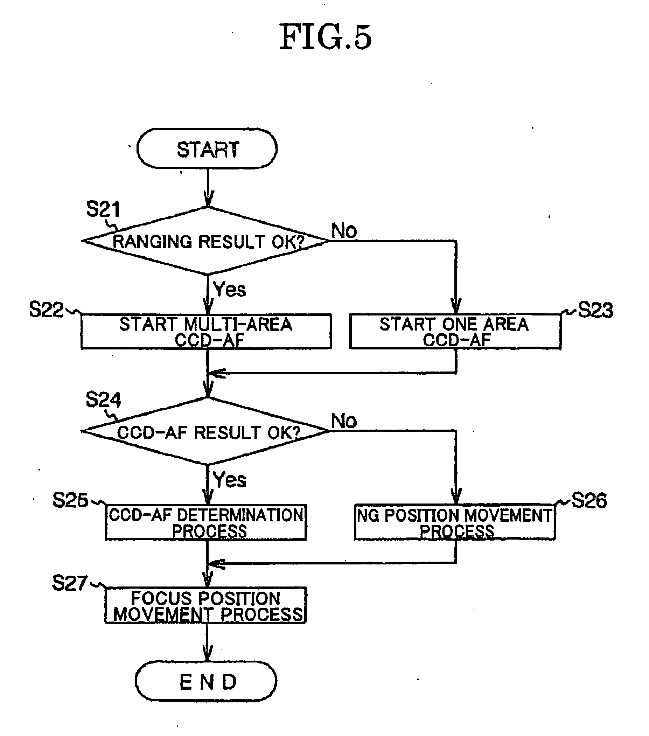

FIG. 5 is a flow chart illustrating the operation of the digital still camera according to the embodiment of the present invention. Referring to FIG. 5, it is determined whether or not the ranging result obtained by the ranging unit 85 is reliable (S21). If the ranging result is reliable (Yes at S21), a multi-area CCD-AF is conducted (S22). The multi-area CCD-AF is conducted by using three areas as illustrated in FIG. 3A. In the multi-area CCD-AF, a plurality of focused results is obtained. If the ranging result is not reliable (No at S21), a one-area CCD-AF as illustrated in FIG. 3B is conducted, and one focused result is obtained (S23). In the multi-area CCD-AF, according to the ranging results, at first, the focusing lens is moved to the position corresponding to the ranging result (distance), and the CCD-AF is conducted therearound. In the one-area CCD-AF, the CCD-AF is conducted to the entire area (from infinite position to the closest position) as the CCD-AF area.
Next, at step S24, if the result of the CCD-AF is OK, i.e., the focal point is detected (Yes at S24), the CCD-AF determination process is conducted (S25), and the area that the focal point is detected is determined and the focusing lens is moved to the focal position (S26). If the CCD-AF result is NG (No at S24), the focusing lens is moved to a predetermined focusing position, for example, a focusing position corresponding to about 2.5m (S27), and then the operation is completed. In addition, the CCD-AF determination process at step S25 will be described later.

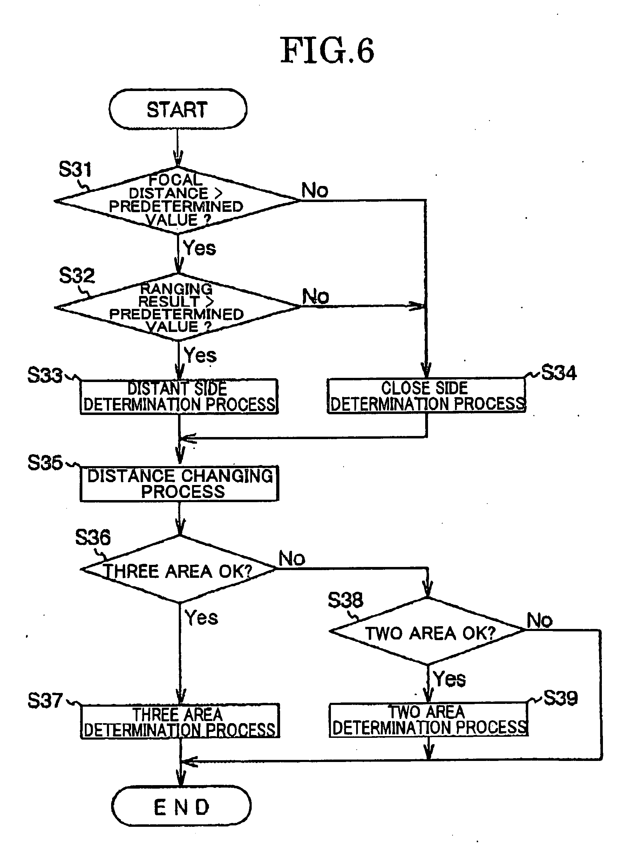

FIG. 6 is a flow chart illustrating the CCD-AF determination process according to the first embodiment of the present invention. In this case, at first, it is determined whether or not the focal distance is a predetermined value or more (S31). This process depends on the lens barrel unit 30 of the digital camera. AS to a single vision camera, this determination is not always necessary. Moreover, as to the predetermined value, a telephoto distance having a frequency characteristic of the lens included in the lens barrel unit 30 that the low frequency increases is preferable.
The camera according to the present embodiment has a focal distance of 105mm (35 mm film standard). In this case, if the focal distance exceeds the predetermined value (Yes at S31), it is determined whether or not the value of the ranging result of the ranging unit 85 is a predetermined value or more (S32). The predetermined value is a distance on the distant side, in this embodiment, it is 10m. It is preferable to change this value in view of a depth of field. In this case, if the ranging result indicates the distant side than the predetermined value (Yes at S32), i.e., the value of the ranging result has a value larger than the predetermined value, a distant side determination process is carried out (S33).
On the other hand, if a negative result is obtained at step S31 and step S32, a near side determination process is carried out (S34). The determination results of the distant side determination process and the close side determination process are used for a subsequent area determination.

Next, at step S35, as a distance changing process, the focusing position of the focused lens by the CCD-AF in each of the areas is detected, and a distance corresponding to the focused position is calculated from the focused position. The distance is calculated by determining a distance corresponding to the focusing position of the focused lens on the focusing curve of the lens barrel unit 30.
Next, as the area determination process, if the CCD-AF is the multi-area CCD-AF, it is determined which area is selected. In case of the one-area CCD-AF, only one focal position is obtained; thus, the operation is completed without performing this process.
Accordingly, as the area determination process, at step S36, it is determined whether all of the three areas are OK or not. In this case, the CCD-AF results of all three areas are OK (Yes at S36), the focal point is detected in the three areas as a three-area determination process (S37).
In this case, if the distant side determination process is previously selected, the area indicating the most distant side is selected in the areas. If the close side determination process is selected, the area indicating the closest side is selected in the three areas.

On the other hand, if a negative result is obtained at step S36 (No at step S36), it is determined whether or not the two areas are OK at step S38. In this case, if the CCD-AF results of the two areas are OK (Yes at S38), the focal position is detected in the two areas as a two-area determination process at step S39. In this case, if the distant side determination process is previously selected, a distant side area is selected. If the close side determination process is selected, a close side area is selected. In addition, if the CCD-AF result of only one area is OK, the process is completed because the focal position is only one similar to the one-area CCD-AF.
Accordingly, under the environment that the noise generates by the frequency characteristic of the lenses of the camera, causing a false focused position, the determination is conducted based on the ranging result from the ranging unit 85; thus, an accurate focal detection is achieved.

### (Second Embodiment)

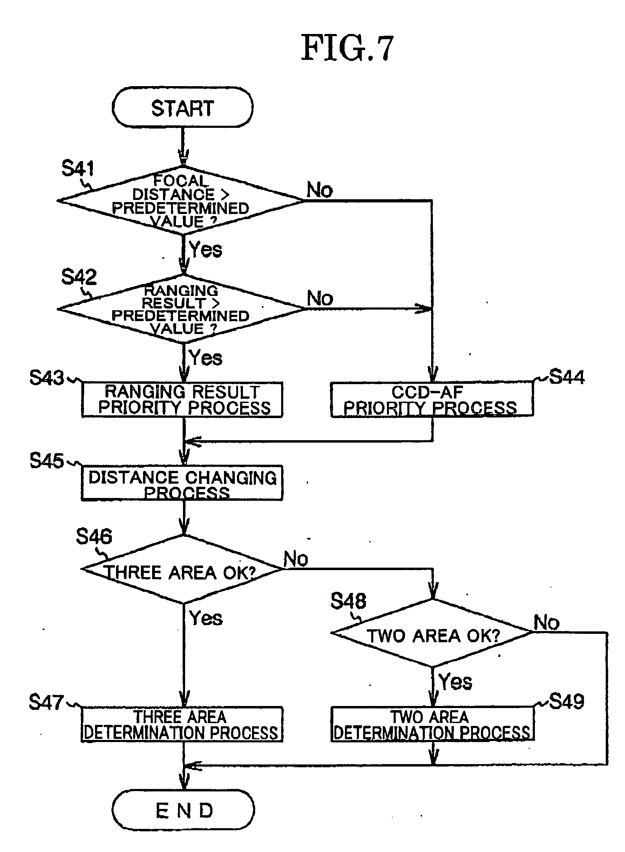

FIG. 7 is a flow chart illustrating a CCD-AF determination process according to the second embodiment of the present invention. In this case, at first, it is determined whether or not the focal distance is a predetermined value or more (S41). If the focal distance exceeds the predetermined value (Yes at S41), it is determined whether or not the ranging result of the ranging unit 85 is the predetermined value or more (S42). If the ranging result indicates a distant side than the predetermined value (Yes at S42), i.e., the value of the ranging result indicates a value larger than the predetermined value, a ranging result priority process is performed (S43).
On the other hand, if a negative result is obtained at step S41 and step S42, a CCD-AF priority process is conducted (S44). The determination results of the ranging result priority process and the CCD-AF priority process are used for a subsequent area determination. Next, the above distance changing process is conducted at step S45.

Next, as the area determination process, if the CCD-AF is the multi-area CCD-AF, it is determined which area is selected. In case of the one-area CCD-AF, only one focal position is obtained; thus, the operation is completed without conducting this process.
For this reason, it is determined whether or not all of the three areas are OK as the area determination process at step S46. In this case, if the CCD-AF results of all of the three areas are OK (Yes at S46), the focal position is detected in the three areas as the three-area determination process (S47).
If the ranging result priority process is previously selected, an area indicating the shortest distance of the ranging result is selected in the areas. If the CCD-AF priority process is selected, an area indicating the shortest distance is selected in the three areas.

On the other hand, if a negative result is obtained at step S46 (No at step S46), it is determined whether or not the two areas are OK at step S48. In this case, the CCD-AF results of two areas are OK (Yes at step S48), the focal position is detected in the two areas as the two-area determination process at step S49. Also, if the ranging result priority process is previously selected, an area indicating the shortest distance of the ranging result in the areas is selected. If the CCD-AF priority process is selected, an area indicating the shortest distance in the areas is selected. In addition, if the CCD-AF result of only one area is OK, the process is completed because the focal position is only one similar to the one-area CCD-AF.
Accordingly, under the environment that the noise generates by the frequency characteristic of the lenses of the camera, causing a false focused position, the determination is conducted based on the ranging result from the ranging unit 85; thus, an accurate focal detection is achieved.

### (Third Embodiment)

Next, the third embodiment of the present invention will be described.
At first, the arithmetic method and the structure of the ranging unit 85, and the focus detection method using the arithmetic result from the ranging unit 85 will be described. At first, the arithmetic method and the structure of the ranging unit 85 will be described.
The ranging unit 85 includes inside thereof charge storage light receiving sensors each of which are arranged on the right and left (not show), for example, CCD line sensors. The light receiving sensors are divided into a plurality of light receiving areas, and the right and left areas correspond to each other. The ranging unit 85 receives light by the right and left light receiving sensors if a light receiving command is sent form the CPU block 13. The light receiving is automatically completed if at least one sensor by which a predetermined light volume or more is received exists in the light receiving sensors.

In addition, there may be a case that a predetermined light volume or more is not obtained under a dark environment or an environment having low contrast, for example. In this case, the light receiving is completed at a predetermined time. When the ranging unit 85 does not receive a predetermined light volume or more if the light receiving is performed for about 500ms, the light receiving is forcibly completed. Moreover, according to the third embodiment, a time required for receiving the light can be recorded as described later. If the light receiving is completed, the correlation of right and left subject images in each of the areas in the light receiving sensors is detected, and the difference between the right and left light receiving elements is calculated according to the detected correlation value. A distance to the subject is calculated by means of a triangulation method, and the calculated distance is used as a ranging value. Therefore, each of the areas has a ranging value (distance data) having a different value each other. The ranging value and the area to be actually output to the camera side from the ranging unit 85 are determined by judging whether or not the ranging value of each area is smaller than a ranging value of another area, or whether or not the reliability of the sensor data received by the area is high. The determination of the reliability of the sensor data is conducted whether or not the contrast and the difference between the right and left images of the light receiving data in each of the right and left areas satisfy a predetermined value. However, if all of the areas do not satisfy the predetermined value, an area having the highest availability of the ranging value in all of the areas (closest to the predetermined value) is selected.

Next, a digital still camera according to the third embodiment of the present invention will be described.

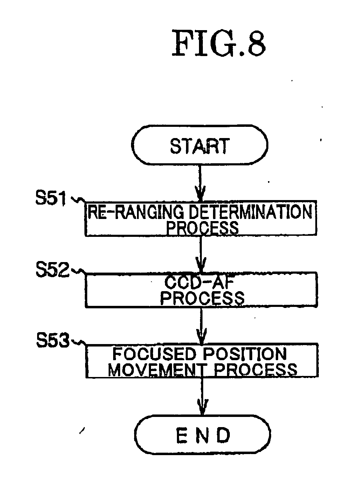

FIG. 8 is a flow chart illustrating an AF sequence order which is the operation of the digital still camera according to the third embodiment of the present invention.
In this case, at first, a re-ranging determination process, which determines whether or not a re-ranging is conducted with respect to the ranging result of the ranging unit, is conducted (S51). Next, a device for determining an AF result based on the determination result is determined, and a CCD-AF process for performing a CCD-AF is carried out (S52). After that, a focused position movement process which moves a focusing position to a focused position is carried out (S53).

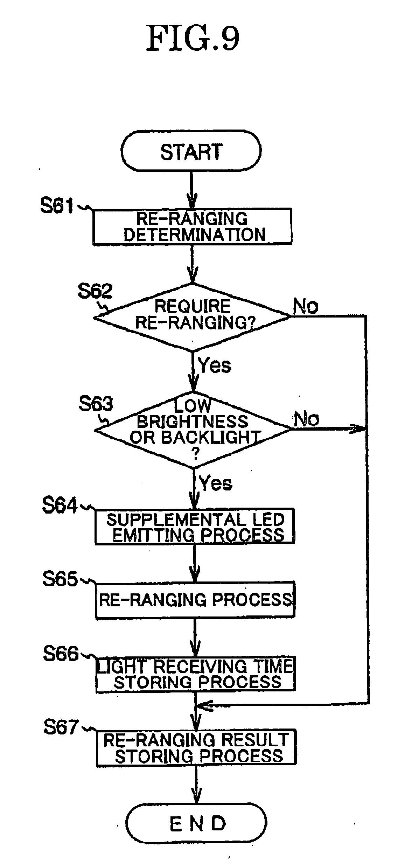

FIG. 9 is a flow chart illustrating the re-ranging process of the above ranging unit 85. In this case, the re-ranging determination is performed with respect to the ranging result obtained if the release button is half-pressed, (S61). The need of the re-ranging is determined whether or not all of the difference between the right and left images and the contrast of the light receiving data satisfy a predetermined value. If one of them does not satisfy the predetermined value, it is determined that the re-ranging is necessary. If it is determined that the re-ranging is necessary at the subsequent step S62 (Yes at S62), it is determined whether or not the subject has low brightness or backlight at step S63. In this case, if the subject has low brightness (Yes at S63), a fill light LED emitting process is conducted at step S64..
The brightness of the subject is determined by obtaining a luminance value with the AF evaluation value. In this case, the low brightness is Lv4 or below.

In the fill light LED emitting process at step S64, the light is emitted by setting the output port to the AF fill light LED (LED light emitting device) included as the fill light illumination device to Hi, and also the light emitting is stopped by setting the output port to Low. In this case, the output port of the AF fill light LED is set to Hi for continuing the light emitting.
Next, the re-ranging process is conducted in a state that the fill light is illuminated at step S65. In this case, a process for storing a light receiving time when receiving light by the ranging unit 85 is conducted at step S66, and then the result of the re-ranging is stored at step 567.
On the other hand, if a negative result is obtained at steps S62, S63, the ranging result is stored at step S67, and the operation is completed.

Next, the operation of the digital still camera according to the third embodiment of the present invention will be described. In addition, the basic operation of the digital still camera is similar to that shown in FIG. 5; thus, the explanation will be omitted.

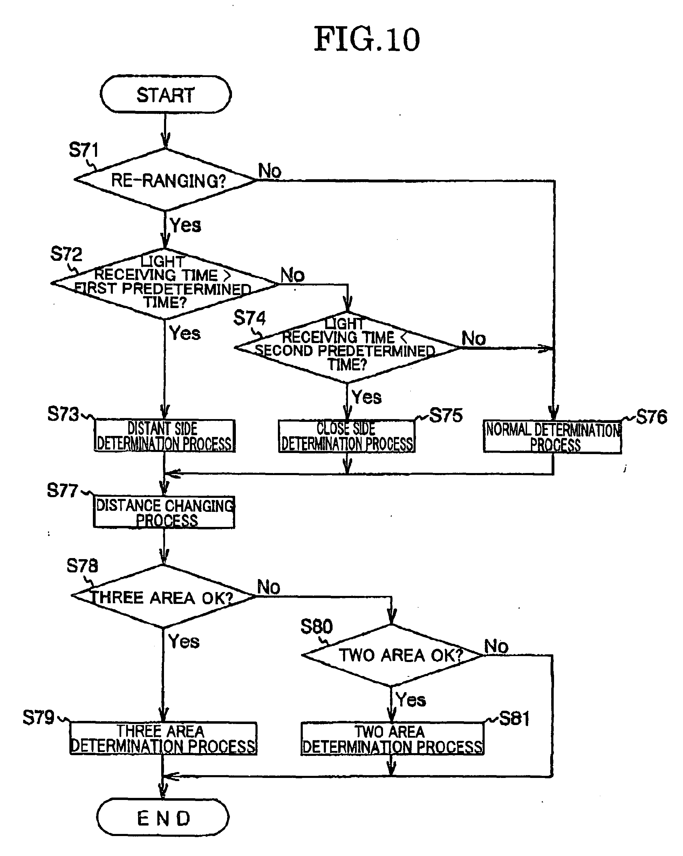

FIG. 10 is a flow chart illustrating the CCD-AF determination process according to the third embodiment of the present invention.
In this case, at first, it is determined whether or not the re-ranging is conducted (S71). Here, if a positive result is obtained (Yes at S71), it is determined whether or not the light receiving time for re-ranging exceeds a first predetermined time (S72). In this case, if the light receiving time exceeds the first predetermined time (Yes at S72), it is determined that the subject is positioned close to a long distance that AF fill light LED does not reach, and a distant side determination process, which preferentially determines a distant side, is conducted (S73). In this case, the first predetermined time is 500ms which is a limiter of an external AF light receiving time. If the first predetermined time is set to be changeable, the first predetermined time becomes effective when the ranging unit 85 is changed to another unit.

On the other hand, at step S72, if the light receiving time does not exceed the first predetermined time (No at S72), it is determined whether or not the light receiving time of the re-ranging exceeds a second predetermined time at step S74. If the light receiving time is shorter than the second predetermined time (Yes at S74), it is determined that the subject is a close distance subject, and a close side determination process, which preferentially determines a close side, is performed (S75). In this case, the second predetermined time is 1ms.
If a negative result is obtained at steps S71, S74, a normal determination process is conducted (S76). In addition, these normal determination process, distant side determination process and close side determination process are used for a subsequent area determination.
Next, a distance changing process is conducted at step S77. Moreover, the distance changing process is similar to that described at S45; thus, the explanation will be omitted.

Next, as an area determination process, if the CCD-AF is the multi-area CCD-AF, it is determined which area is selected. If the CCD-AF is the one-area CCD-AF, only one focal position is obtained, so the operation is completed without conducting this process.
Therefore, as the area determination process, at first, it is determined whether or not all of the three areas are OK at step S78. In this case, if the CCD-AF results of all of the three areas are OK (Yes at S78), the focal position is detected in the three areas as a three area determination process. If the normal determination process is selected by the former determination, an area indicating the shortest distance of the ranging result is selected. If the distant side determination process is selected, an area indicating the most distant side in the areas is selected. If the close side determination process is selected, an area indicating the closest side in the three areas is selected.

On the other hand, if a negative result is obtained at step S78, it is determined whether or not the two areas are OK. If the CCD-AF results of the two areas are OK (Yes at S80), the focal position in the two areas is detected as two-area determination process. In this case, if the normal determination process is previously selected, an area indicating the shortest distance of the ranging result is selected. If the distant side determination process is selected, an area on the distant side is selected. If the close side determination process is selected, an area on the close side is selected. Moreover, if the CCD-AF result is OK only in one area, the operation is completed because the focal position is only one similar to that of one-area CCD-AF.
As described above if the fill light is illuminated under a dark environment, causing the reduction in the reliability of the CCD-AF accuracy, the reliability of the CCD-AF can be covered by changing the determination of the CCD-AF based on the ranging result and light receiving time by means of the light receiving result of the ranging unit 85.

### (Fourth Embodiment)

Next, the fourth embodiment of the present invention will be described.

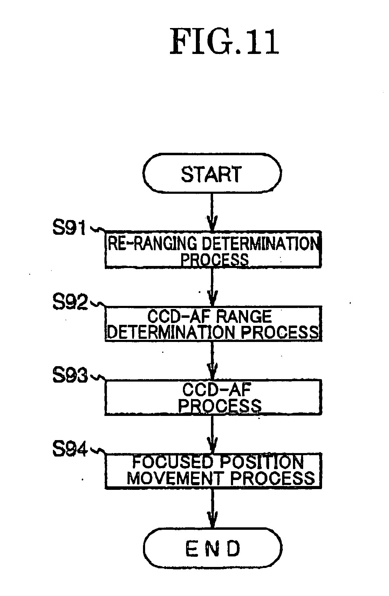

FIG. 11 is a flow chart illustrating an AF sequence order which is the operation of the digital still camera according to the fourth embodiment of the present invention.
In this case, at first, a re-ranging determination process, which determines whether or not the re-ranging is conducted with respect to the ranging result of the ranging unit, is conducted (S91). Next, the CCD-AF area determination process which determines an autofocusing position driving area for the CCD-AF is conducted according to the determination result (S92). If a device for determining the AF result is determined, the CCD-AF process which performs the CCD-AF is conducted (S93). After that, the focused position movement process which moves the focusing position to the focused position is conducted (S94).
In addition, the re-ranging determination process and the CCD-AF process in the fourth embodiment are similar to that processes illustrated in FIGs. 9, 10; thus, the explanation will be omitted.

FIG. 12 is a flow chart illustrating the CCD-AF area determination process according to the fourth embodiment of the present invention.
In this case, at first, it is determined whether or not the re-ranging is conducted (S101). If a positive result is obtained (Yes, at S101), it is determined whether or not the light receiving time in the re-ranging exceeds a first predetermined time (S102). If the light receiving time exceeds the first predetermined time (Yes at S102), it is determined that the subject is positioned close to a long distance that the AF fill light LED does not reach, and it is determined that the AF is required for an area wider than a normal area, and then the CCD-AF area is expanded (S103). It is preferable for the expanded area of the CCD-AF to expand the distant side area than the close side area. However, the close side area can be expanded if there is no problem for the CCD-AF time and the power consumption.

On the other hand, at step S102, if the light receiving time does not exceed the first predetermined time (No at S 102), it is determined whether or not the light receiving time for the re-ranging exceeds the second predetermined time at S104.
In this case, if the light receiving time is shorter than the second predetermined time (Yes at S104), it is determined that the subject is positioned in a close distance side, and the CCD-AF area is reduced (S105).
Moreover, if a negative result is obtained at steps S101, S104, the normal CCD-AF area is selected (S106).

As described above, if the fill light is illuminated under a dark environment, causing the reduction in the reliability of the CCD-AF accuracy, the reliability of the CCD-AF can be covered by expanding and reducing the CCD-AF area, the determination of the CCD-AF results, and also the light-receiving time and the ranging result by means of the light receiving result of the external AF; thus, the highly accurate AF can be achieved.

According to the embodiment of the present invention, the focal point is determined by the focus determination device according to the ranging result of the ranging device for conducting ranging from a subject. Therefore, if it is difficult to find a peak position as in the case of noise generation, or the smoothing of the mountain of the mountain-climbing AF, the area to be selected can be determined by the ranging result. Accordingly, a false focused area can be eliminated; thus, highly accurate detection can be achieved.

In addition, according to the embodiment of the present invention, the imaging apparatus has the fill light illumination device for illuming the light to the subject, and the ranging by the ranging device is performed in a state that the fill light is illuminated by the fill light illumination device. Therefore, even if the reliability of the focus detection accuracy by the focus detection device is reduced, the focus detection accuracy can be improved by the determination of the focal point by the focus determination device according to the ranging result of the ranging device, and expanding and reducing the focus detection area. Accordingly, the highly accurate autofocusing function can be achieved.

## Claims

1. An imaging apparatus for obtaining image data by receiving a light of a subject which has passed through a photographing lens (30), comprising:
a focus detection device (13) for detecting focal points from image data areas of a plurality of image data obtained by moving a position of the photographing lens;
a ranging device (85) for determining the range of the subject; and
a focus determination device for determining a focal point from the focal points detected by the focus detection device according to a ranging result of the ranging device.

2. The imaging apparatus according to Claim 1, wherein the focus determination device determines the focal point according to the ranging result of the ranging device (85) and a focal length detected by the focus detection device (13).

3. The imaging apparatus according to Claim 1 or Claim 2, wherein when a distance of the ranging result of the ranging device (85) has a distance shorter than a predetermined distance, the focus determination device determines the focal point from the focus detection result of an area indicating a closest side in the plurality of image data areas.

4. The imaging apparatus according to Claim 1 or Claim 2, wherein when a distance of the ranging result of the ranging device (85) has a distance longer than a predetermined distance, the focus determination device determines the focal point from the focus detection result of an area indicating a most distant side in the plurality of image data areas.

5. The imaging apparatus according to any one of the preceding claims, further comprising a fill light illumination device for illuminating a light to the subject, wherein the ranging device (85) conducts the ranging in a state that the fill light is illuminated by the fill light illumination device.

6. The imaging apparatus according to Claim 5, wherein the ranging device includes an accumulating device for accumulating the light, and an accumulating state detection device for detecting an accumulated state, and the focus determination device determines the focal point according to a accumulation time that the accumulating state detection device becomes a predetermined accumulation amount by the fill light from the fill light illumination device.

7. The imaging apparatus according to Claim 6, wherein when the accumulation time of the accumulating state detection device is shorter than a predetermined time, the focus determination device determines the focal point from the focus detection result of an area indicating a closest side in the plurality of image data areas.

8. The imaging apparatus according to Claim 6, wherein when the accumulation time of the accumulating state detection device is longer than a predetermined time, the focus determination device determines the focal point from the focus detection result of an area indicating a most distant side in the plurality of image data areas.

9. The imaging apparatus according to any one of the preceding claims, further comprising a driving area changing device for changing an area which drives the photographing lens according to the determination result of the focus determination device.

10. The imaging apparatus according to any one of Claims 5 to 8, wherein the fill light illumination device is a strobe light emitting device (83).

11. The imaging apparatus according to any one of Claims 5 to 8, wherein the fill light illumination device is an LED emitting device.

12. The imaging apparatus according to any one of Claims 5 to 8, wherein the fill light illumination device is a lamp emitting device.

13. An imaging method of obtaining imaging data by receiving a light of a subject which has passed through a photographing lens (30), comprising the steps of:
a focus detection step for detecting focal points from image data areas of a plurality of image data obtained by moving a position of the photographing lens;
a ranging step for determining the range of the subject; and
a focus determination step for determining a focal point from the focal points detected by the focus detection step according to a ranging result of the ranging step.

14. The imaging method according to Claim 13, wherein when a distance of the ranging result of the ranging step has a distance shorter than a predetermined distance, the focus determination step determines the focal point from the focus detection result of an area indicating a closest side in the plurality of image data areas.

15. The imaging method according to claim 13, wherein when a distance of the ranging result of the ranging step has a distance longer than a predetermined distance, the focus determination step determines the focal point from the focus detection result of an area indicating a most distant side in the plurality of image data areas.

16. The imaging method according to any one of the preceding claims, wherein the ranging step conducts the ranging in a state that a fill light is illuminated by a fill light illumination device for illuminating the light to the subject.

17. The imaging method according to Claim 16, wherein the ranging step includes an accumulating step for accumulating the light, and an accumulating state detection step for detecting a state accumulated by the accumulating step, and the focus determination step determines the focal point according to a accumulation time that the accumulating state detection step becomes a predetermined accumulation amount by the fill light from the fill light illumination device.

18. The imaging method according to Claim 17, wherein when the accumulation time of the accumulating state detection step is shorter than a predetermined time, the focus determination step determines the focal point from the focus detection result of an area indicating a closest side in the plurality of image data areas.

19. The imaging method according to Claim 17, wherein when the accumulation time of the accumulating state detection step is longer than a predetermined time, the focus determination step determines the focal point from the focal detection result of an area indicating a most distant side in the plurality of image data areas.

20. The imaging method according to any one of the preceding claims, further comprising a driving area changing step for changing an area which drives the photographing lens according to the determination result of the focus determination step.

21. A computer program comprising program code means that, when executed on a computer system instructs an imaging apparatus to carry out the steps according to any one of claims 13 to 20.

22. A computer readable storage medium having recorded thereon program code means that, when executed on a computer system, instructs an imaging apparatus to carry out the steps according to any one of claims 13 to 20.
